Europäisches Patentamt

(19) **European Patent Office**

Office européen des brevets

(11) Publication number **0 018 411.**
**A1**

# EUROPEAN PATENT APPLICATION

published in accordance with Art. 158(3) EPC

(21) Application number: 78900235.9

(22) Date of filing: 31.10.78

Data of the international application taken as a basis:

(86) International application number:
PCT/JP78/00015

(87) International publication number:
WO 80/00990
International publication date:
15.05.80

(51) Int. Cl.³: **F 02 C 5/12**

---

(43) Date of publication of application:
**12.11.80 Bulletin 80/23**

(84) Designated Contracting States:
**FR**

(71) Applicant: **OGATA, Saburo**
**2-11 Shonai Higashimachi 4-chome Toyonaka-shi**
**Osaka 560(JP)**

(72) Inventor: **OGATA, Saburo**
**2-11 Shonai Higashimachi 4-chome Toyonaka-shi**
**Osaka 560(JP)**

(74) Representative: **Patentanwälte Ter**
**Meer-Müller-Steinmeister**
**Siekerwall 7**
**D-4800 Bielefeld 1(DE)**

(54) **TURBINE-TYPE INTERNAL COMBUSTION ENGINE.**

(57) Internal combustion engine combinating a two-cycle combustion chamber with a gas turbine. This invention makes it possible to overcome troubles caused by incomplete combustion of fuel in a known cylinder type engine and troubles caused by too much consumption of fuel in a known gas turbine. A casing (49) contains a rotary wheel (1) provided with a series of blades (2) only at a portion of its peripheral surface and with an arc surface (8) at the remaining portion. The arc surface is of the same radius as the top ends of the blade form. When the series of blades (2) passes through the front of an injection nozzle (31), explosion happens in the combustion chamber so that combustion gas directly impacts the series of blades and rotates the wheel.

./...

FIG.1

the combustion chamber while the engine is in operation, the engine requires a greater fuel consumption than piston-type engines. Additionally the necessity of supplying pressurized air to the combustor at a constant compression ratio at all times entails the problem that the engine requires a powerful blower and a special combustor.

## Disclosure of the Invention

The present invention provides a gas turbine engine comprising a rotary wheel having a row of impulse blades only on part of its circumference and a circular arc surface formed on the remaining portion of the circumference and in contact with a casing, a combustion chamber disposed above the casing, and a nozzle communicating with the combustion chamber and having its forward end opened in the direction of a tangent to the periphery of the rotary wheel, whereby only when the row of blades on the rotary wheel passes the orifice of the nozzle, the charge is exploded in the combustion chamber, causing the combustion gas to impinge directly on the blades of the row to drive the rotary wheel by the impact.

The rotary shaft of the rotary wheel is provided with bladed plates arranged in parallel to the rotary wheel and having second and subsequent rows of blades, such as reaction blades, in phase with the first row of blades, with a row of guide blades interposed between each two adjacent rows of blades and attached to the casing so that the energy of motion and pressure of the exhaust gas forced out from the nozzle and released from the first row of blades is effectively utilized by the second and subsequent rows of blades.

The casing is formed with an air inlet for supplying fresh air to the row of blades on the rotary wheel to remove the exhaust gas from the row of blades and burn the unburned component of the combustion gas from the nozzle among the blades by secondary combustion.

With the present invention, the force of explosion of the combustion gas produced in the combustion chamber acts directly on the blades of the rotary wheel to drive the wheel, giving an exceedingly greater torque than conventional gas turbines in which the combustion gas is conducted from the combustor to a rotary bladed wheel through a duct. The larger the radius of the rotary wheel, the greater is the torque available. Since the combustion chamber is adapted for the same cycle as two-cycle ignition engines involving scavenging, injection of fuel, ignition and combustion but does not effect continued combustion unlike gas turbines, the engine of the invention achieves savings in fuel consumption. Moreover, with fresh air supplied to the spaces between the blades through the air inlet to scavenge the row of blades of the exhaust gas, the unburned component of the gas from the nozzle can be completely burned among the blades of the row, consequently inhibiting air pollution and eliminating objectionable afterburning. Thus the present engine has various advantages.

Brief Description of the Drawings

Fig. 1 is a front view in vertical section of an engine according to the invention;

Fig. 2 is a view in section taken along the line II-II in Fig. 1;

Fig. 3 is a front view of the engine;

Fig. 4 is a sectional view showing the same as it is seen in the direction of the arrows IV-IV with an upper casing segment alone removed; and

Figs. 5 to 8 are diagrams illustrating the principle of the operation of the internal-combustion engine according to the invention.

## Best Mode of Carrying Out the Invention

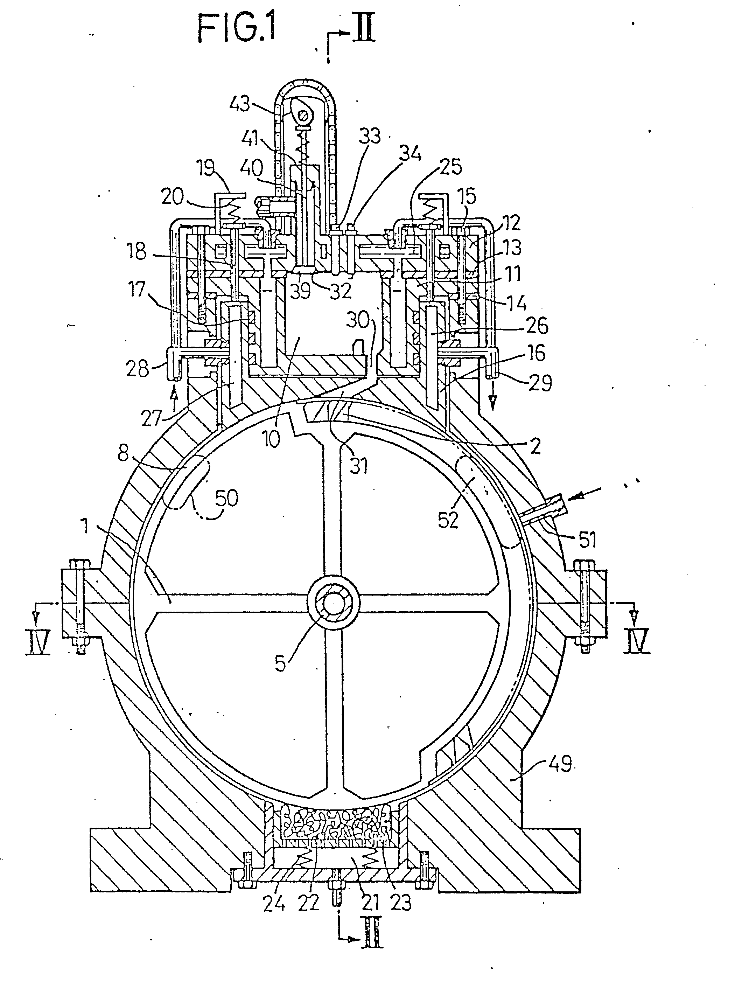

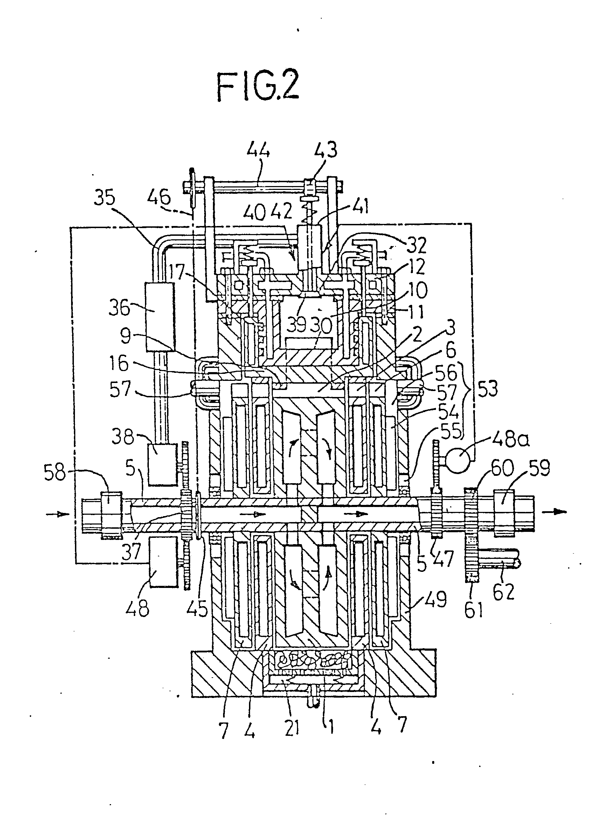

The casing 49 of an internal-combustion engine houses a rotary wheel 1 rotatably supported therein and is provided with a combustion chamber 10 thereabove. As shown in Figs. 1 and 2, the rotary wheel 1 has a multiplicity of impulse blades arranged on part of its circumference to provide a first blade row 2. Opposed to both sides of the rotary wheel 1 over the range of the nozzle 31 to be described later to exhaust ports 50 are stationary bladed plates 4 housed in the casing and each formed with a row of guide blades 3 aligned on its periphery. The rotary shaft 5 of the rotary wheel 1 has mounted thereon bladed plates 7 each having a second row of blades 6 in phase with the first blade row 2. In the same manner as above a guide blade row and a third blade row may be arranged on the outer side of each second blade row 6 when so desired.

The shapes of the blades can be determined according to the theory of gas turbine blades. Preferably the blades of the first row 2 are shaped as impulse blades, and the blades of the second row 6 and subsequent row as reaction blades. The guide blade row 3 serves to change the direction of flow of the gas released from the first blade row and lead the gas into the next blade row 6.

On the portion of the circumference of each of the rotary wheel 1 and the rotary bladed plates 7 where the blade row 2 or 6 is not provided, a circular arc surface 8 is formed which has the same radius as the path of movement of the outer blade ends. Connectin plates 9 and 9 arcuated in conformity with the circular arc surface 8 are attached to the blades of the first row 2 at opposite sides of their forward ends to form a continuous circle with the circular arc surface 8 and the connecting plates 9, 9.

The combustion chamber 10 is defined by a case 11 placed on the casing and a lid 12 which are fastened to the casing hermetically by bolts 15 with gaskets 13, 14 provided between the fitting faces. A nozzle member 16 is slidably fitted to the lower portion of the case 11, with packings 17 interposed between the fitting faces thereof to fit them together hermetically.

The nozzle member 16 has an inwardly curved bottom surface in the same circular arc form as the surface 8 of the rotary wheel 1 and the connecting plates 9. Holding rods 18 extending through the lid 12 and the case 11 bear on the upper end of the nozzle member 16. Springs 20 are provided between the upper ends of the holding rods 18 and lugs 19 projecting from the lid 12 to lightly press the nozzle member 16 against the outer periphery of the rotary wheel 1.

The casing 49 is formed in its lower portion with a lubricating chamber 21 filled with a lubricant and having a porous plate 22 slidably fitted therein. With heat-resistant abrasion resistant fiber 23 placed on the porous plate 22, the plate 22 is biased upward by springs 24, whereby the circular arc surface 8 of the rotary wheel 1 and the curved-surfaces of the connecting plates 9 are lubricated at all times. The lid 12, the combustion chamber case 11 and the nozzle member 16 are internally formed with water chambers 25, 26 and 27, respectively, to which an inlet pipe 28 and outlet pipe 29 are connected for circulating cooling water to internally cool these members with the water.

The combustion chamber case 11 has in its bottom wall a combustion gas outlet 30. The nozzle member 16 has a discharge nozzle 31 communicating with the gas outlet 30 and inclined in the direction of a tangent to the outer periphery of the rotary wheel 1. Disposed within the combustion chamber 10 at the opening of the gas outlet 30 of the case 11 is an agitating wall 63 for disturbing swirling gas streams in the chamber to promote mixing of fuel with air.

The lid 12 is formed with an inlet port 32 for compressed air and has a fuel injection nozzle 31 and an ignition plug 34. The inlet port 32 is in communication with a compressed air duct 35 which is connected at its forward end to an accumulator 36 to lead compressed air to the inlet port 32. Connected to the accumulator 36 is a compressor 38 which is driven by a gear 37 on the rotary shaft 5. When the rotary shaft 5 rotates, compressed air is produced and fed to the accumulator 36.

A valve 39 is slidably disposed in the air inlet port 32 and has a valve stem 40 extending therefrom. A spring 42 provided between the forward end of the valve stem 40 and a support 41 biases the valve 39 toward a direction to close the inlet port 32. A cam shaft 44 carrying an eccentric cam 43 is disposed above the valve stem 40. The cam shaft 44 is coupled to the rotary shaft 5 through a gear 45 and a chain 46 and moves with the rotation of the rotary shaft 5 to depress the upper end of the valve stem 40 and open the compressed air inlet port 32 with suitable timing.

The fuel injection nozzle 33 is connected to a fuel pump 48 operable by a gear 47 on the rotary shaft 5. The ignition plug 34 is coupled to a breaker 48a similarly coupled to a gear 47 on the shaft 5.

The fuel is injected and a spark is produced by these means with suitable timing in timed relation to the rotation of the rotary shaft 5.

The exhaust ports 50 communicating with the paths of movement of the second blade rows are formed in opposite side walls of the casing 49, ahead of the discharge nozzle 31 toward the direction of advance of the rotary wheel 1. The exhaust gas is released through ducts (not shown) connected to the ports 50. Positioned further ahead of the exhaust ports 50 in the direction of advance are a fresh air inlet 51 formed in the peripheral wall of the casing 49 and communicating with the path of travel of the first blade row 2, and exhaust openings 52 formed in both walls of the casing 49 and communicating with the paths of travel of the final blade rows 6. The air inlet 51 is connected to means 53 for supplying fresh air under pressure.

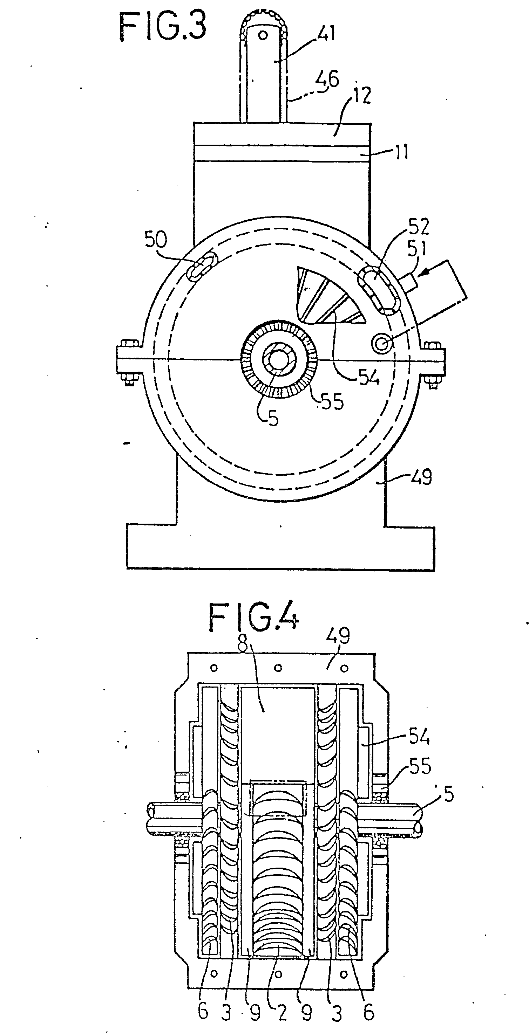

The fresh air supplying means 53 shown in Figs. 2 and 3 comprises blades 54 provided on the outer sides of the plates 7 for the last blade rows for drawing fresh air into intake apertures 55 in the center of the casing and forcing the air through outlets 56 and channels 57 into the air inlet 51. The air supplying means 53 can be modified variously. For example, the air inlet 51 can be connected to the accumulator 36 through a channel to receive compressed air from the compressor 38.

The rotary wheel 1, stationary bladed plates 4, bladed plates 7 for the second and following rows of blades and rotary shaft 5, which are all heated by contact with hot combustion gas, are of a hollow construction. The cooling water inlet pipe 28 is branched and connected to the stationary bladed plates 4 for passing cooling water through the interior of the plates. The shaft 5 is provided at its one end with a rotary joint 58 for passing cooling water through the shaft and through the interior of the rotary bladed plates 7 and of the rotary wheel 1. The water is run off from a rotary joint 59 on the other end of the shaft. The rotary shaft 5 drives an output shaft 62 via a train of gears 60 and 61.

Industrial Applicability

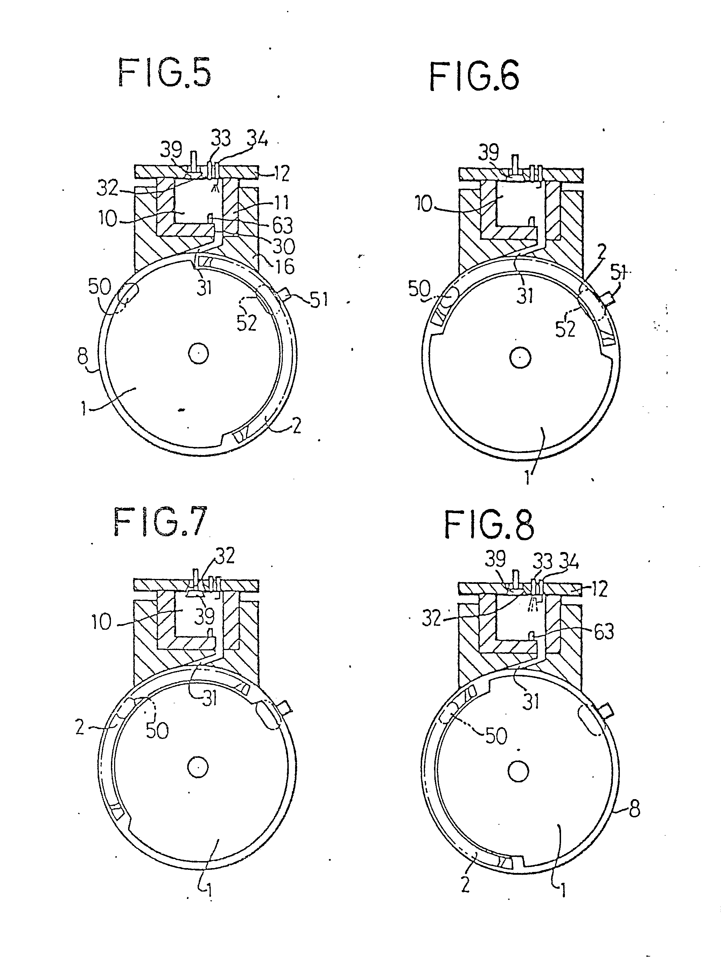

When the forward end of the first row of blades 2 on the rotary wheel 1 in rotation is at a position immediately before the discharge nozzle 31 after passing the air inlet 51 (Fig. 5), the fresh air drawn into the blade row 2 through the inlet 51 has expelled the exhaust gas from the rows of blades 2 and 6 through the exhaust openings 52, filling the blade rows. The mixture of compressed air and fuel filling the combustion chamber 10 is exploded upon ignition by a spark produced by the ignition plug 34.

On explosion within the combustion chamber 10, a stream of combustion gas jets from the discharge nozzle 31 through the gas outlet 30 and impinges directly on the blades of row 2 on the rotary wheel 1 to drive the wheel (Fig. 6). Since the combustion gas produced in the combustion chamber 10 upon explosion directly strikes the first blade row 2 on the rotary wheel 1, little or no energy loss will result. The larger the diameter of the wheel 1, the greater is the resulting torque. The combustion gas impinging directly on the first blade row 2 becomes mixed with the fresh air filling the spaces between the blades to subject the unburned component of the gas to secondary combustion among the blades and flows into the rows of guide blades 3 while progressively expanding, whereupon the gas is turned and flows into the second rows of blades 6. When the second blade rows 6 pass the exhaust ports 50 with the rotation of the rotary wheel 1, the gas in the rows jets out from the exhaust ports 50 while giving torque to the second blade rows by reaction. Although the combustion gas jetting out from the discharge nozzle 31 of the combustion chamber 10 still contains a considerable quantity of unburned component, the gas becomes mingled with fresh air for secondary combustion while passing through the blade rows 2 and 6. Since the unburned component is thus eliminated, the combustion gas can be released from the exhaust ports 50 with air pollution inhibited without entailing a backfire.

When a majority of the blades of first row 2 on the rotary wheel 1 have passed the discharge nozzle 31 with several blades in the rear portion of the row remaining to the rear of the discharge nozzle 31 (Fig. 7), the valve 39 in the combustion chamber 10 is depressed by the eccentric cam 43 and opens the air inlet port 32, permitting compressed air in the accumulator 36 to flow through the duct 35 into the chamber 10 and scavenge the chamber 10 by expelling the exhaust gas from the chamber 10 into the blade row 2 through the discharge nozzle 31.

When the last of the blades on the rotary wheel 1 has passed the discharge nozzle 31 (Fig. 8), the circular arc surface 8 closes the nozzle 31. The wheel 1 is in rotation for continued secondary combustion among the blades and exhaust. In the combustion chamber 10, the valve 39 rises to close the inlet port 32 and confine the compressed air within the chamber 10. While the compressed air strikes the agitating wall 63 when injected into the chamber 10 from the inlet port 32 and is therefore turbulent, the fuel injected from the injection nozzle 33 as atomized mixes with the stream of compressed air. The cycle starting with the ignition process of Fig. 5 is repeated.

According to the present invention, the processes of Figs. 5 to 8 are repeated which involve ignition, explosion, exhaust and injection of fuel in the combustion chamber 10. The impact resulting from every explosion is delivered to the rotary wheel 1 to rotate the rotary shaft 5 and drive the output shaft 62.

## CLAIMS

1. In an apparatus including a rotary wheel having a row of blades on its periphery, housed in a casing and rotatable by combustion gas forced against the blades on the wheel, a turbine-type internal-combustion engine characterized in that the engine comprises a rotary wheel (1) having a row of blades arranged only on a portion of its circumference and a circular arc·surface (8) formed on the remaining portion of the circumference of the wheel (1) and having approximately the same radius as the inner surface of a casing (49), and a combustion chamber (10) disposed above the casing (49) and having a discharge nozzle (31) opened approximately tangentially to the rotary wheel (1), a fuel injection nozzle (33) and an ignition plug (34), the combustion chamber (10) being in communication with a compressed air duct (35) through a valve (39), the casing (49) being formed with exhaust ports (50) at a position ahead of the orifice of the discharge nozzle (33) toward the direction of advance of the rotary wheel (1).

2. An internal-combustion engine as defined in claim 1 wherein the blades on the rotary wheel (1) are connected together at their forward ends by connecting plates (9) of small width continuous with the circular arc of the circular arc surface (8) and in contact with the inner surface of the casing.

3. An internal-combustion engine as defined in claims 1 and 2 wherein the discharge nozzle (31) is formed in a nozzle member (16) hermetically and slidably fitting to the casing (49) and pressed against the periphery of the rotary wheel (1).

4. In an apparatus including a rotary wheel having a row of blades on its periphery, housed in a casing and rotatable by combustion gas forced against the blades on the wheel, a turbine-type internal-combustion engine characterized in that the engine comprises a rotary wheel (1) having a row of blades arranged on a portion of its circumference and a circular arc surface (8) formed on the remaining portion of the circumference of the wheel (1) and having approximately the same radius as the inner surface of a casing (49), a combustion chamber (10) disposed above the casing (49) and having a discharge nozzle (31) opened approximately tangentially to the rotary wheel (1), a fuel injection nozzle (33) and an ignition plug (34), a compression air duct (35) communicating with the combustion chamber (10) through a valve (39) for supplying compressed air to the chamber, second and subsequent rows of blades (6) arranged on the shaft of the rotary wheel (1) in parallel to the first row of blades (2), and rows of guide blades (3) interposed between the rows of blades and fixed to the casing for changing the direction of the flow of exhaust gas from the preceding row of blades (2) to guide the gas to the next rows of blades, the casing (49) being formed with exhaust ports (50) at a position ahead of the orifice of the discharge nozzle (31) toward the direction of advance of the rotary wheel (1).

5. An internal-combustion engine as defined in claim 4 wherein the guide blade rows (3) and the second and subsequent blade rows (6) are arranged symmetrically on both sides of the first blade row (2) on the rotary wheel, and the exhaust ports (50) are formed in the opposed walls of the casing (49) in a symmetric arrangement.

6. In an apparatus including a rotary wheel having a row of blades on its periphery, housed in a casing and rotatable by combustion gas forced against the blades on the wheel, a turbine-type internal-combustion engine characterized in that the engine comprises a rotary wheel (1) having a row of blades arranged on a portion of its circumference and a circular arc surface (8) formed on the remaining portion of the circumference of the wheel (1)

0018411

and having approximately the same radius as the inner surface of a casing (49), and a combustion chamber (10) disposed above the casing (49) and having a discharge nozzle (31) opened approximately tangentially to the rotary wheel (1), a fuel injection nozzle (33) and an ignition plug (34), the combustion chamber (10) being in communication with a compressed air duct (35) through a valve (39), the casing (49) being formed with exhaust ports (50) at a position ahead of the orifice of the discharge nozzle (31) toward the direction of advance of the rotary wheel (1), and with an air inlet (51) for introducing fresh air into the blade row (2) and exhaust openings (52) at a position further ahead of the exhaust ports (50) toward the direction of advance.

7. An internal-combustion engine as defined in claim 4 wherein the air inlet (51) communicates through a channel (57) with a downstream side portion of the rotary wheel where air supply blades (54) are disposed.

8. An internal-combustion engine as defined in claim 4 wherein the air inlet (51) communicates with an air compressor.

9. An internal-combustion engine as defined in claim 6 wherein second and subsequent rows of blades (6) are mounted on the rotary shaft (5) of the rotary wheel (1) in parallel to the first blade row (2), and rows of guide blades (3) fixed to the casing are each interposed between the blade rows (2) and (6), the air inlet (51) being opened to the circumference of the first blade row (2), the exhaust openings (52) being opposed and opened to the downstream sides of the last blade rows (6).

10. An internal-combustion engine as defined in claim 9 wherein the guide blade rows (3) and the second and subsequent blade rows (6) are arranged on both sides of the first blade row (2), and the exhaust ports (50) and the exhaust openings (52) are formed in the opposed walls of the casing (49) and opposed to the downstream sides of the last blade rows (6),(6).

FIG.1

## FIG.2

FIG.3

FIG.4

0018411

## FIG.5

## FIG.6

## FIG.7

## FIG.8

## I. CLASSIFICATION OF SUBJECT MATTER (if several classification symbols apply, indicate all)[3]

According to International Patent Classification (IPC) or to both National Classification and IPC

F 02 C 5/12

## II. FIELDS SEARCHED

### Minimum Documentation Searched[4]

| Classification System | Classification Symbols |
|---|---|
| IPC | F 02 C   5/00- 5/12   F O/D   1/00 - 1/36 |

### Documentation Searched other than Minimum Documentation to the Extent that such Documents are Included in the Fields Searched[5]

Jitsuyo Shinan Koho   1926 - 1979

Kokai Jitsuyo Shiam Koho   1971 - 1979

## III. DOCUMENTS CONSIDERED TO BE RELEVANT[14]

| Category[*] | Citation of Document,[16] with indication, where appropriate, of the relevant passages[17] | | Relevant to Claim No.[18] |
|---|---|---|---|
| X | US, A, 3,650,105, | 1972 - 3-21 | 1, 2, |
| X | GB, A, 559,702, | 1944 | 3 |
| A | US, A, 3,156,093, | 1964 - 11 - 10 | 1 |
| A | US, A, 2,416942, | 1947 - 3 - 4 | 1, 6, |
| A | US, A, 2,444,213, | 1948 - 6 - 29 | 6 |
| A | US, A, 2370,217, | 1945 - 2 - 27 | 7, 8 |
| A | JP, CI, 10,779, | 1906 - 7 - 11 | 1, |
| A | GB, A, 1,002,596, | 1962 - 7 - 20 | 4 |
| A | JP, BI, 33 - 5355, | 1958 - 7 - 25 | 4, 5 |

* Special categories of cited documents:[15]

"A" document defining the general state of the art

"E" earlier document but published on or after the International filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

## IV. CERTIFICATION

| Date of the Actual Completion of the International Search[3] | Date of Mailing of this International Search Report[3] |
|---|---|
| 29 January 1979 ( 1 - 29 - 1979 ) | 5 February 1979 ( 2 - 5 - 1979 |
| International Searching Authority[1] | Signature of Authorized Officer[20] |
| European Patent Office    (ISA/JP) | |

Form PCT/ISA/210 (second sheet) (October 1977)